Europäisches Patentamt

European Patent Office

Office européen des brevets

(19)

(11) Veröffentlichungsnummer: **0 379 168**
**A2**

(12) # EUROPÄISCHE PATENTANMELDUNG

(21) Anmeldenummer: **90100906.8**

(22) Anmeldetag: **17.01.90**

(51) Int. Cl.⁵ **G01J 3/46**

(30) Priorität: **20.01.89 DE 8900609 U**

(43) Veröffentlichungstag der Anmeldung:
**25.07.90 Patentblatt 90/30**

(84) Benannte Vertragsstaaten:
**BE DE ES FR GB IT SE**

(71) Anmelder: **Herberts Gesellschaft mit beschränkter Haftung**
**Christbusch 25**
**D-5600 Wuppertal 2(DE)**

(72) Erfinder: **Höffer, Michael**
**Neuenhofer Strasse 36**
**D-5600 Wuppertal 12(DE)**

(74) Vertreter: **Türk, Gille, Hrabal**
**Brucknerstrasse 20**
**D-4000 Düsseldorf 13(DE)**

(54) **Abmusterungskammer zur visuellen Beurteilung von farbigen Prüfobjekten.**

(57) Abmusterungskammer bestehend aus einem quaderförmigen Gehäuse mit einer Lichtquelle, die das Prüfobjekt bestrahlt. Das Prüfobjekt kann durch eine Öffnung betrachtet werden. Bei solchen bekannten Abmusterungskammern können keine reproduzierbaren Vergleiche durchgeführt werden, da Beobachtungsabstand zum Prüfobjekt so wie der Beobachtungswinkel nicht genau festgelegt sind.

Die erfindungsgemäße Abmusterungskammer weist einen Vorsatz mit Beobachtungsfenstern sowie einen dreidimensional verstellbaren Prüfobjektträger auf, so daß der Beobachtungsabstand festgelegt und der Beobachtungswinkel reproduzierbar einstellbar ist.

Farbbeurteilung bei lackierten Teilen.

EP 0 379 168 A2

**Abmusterungskammer zur visuellen Beurteilung von farbigen Prüfobjekten**

Die Erfindung betrifft eine Abmusterungskammer zur visuellen Beurteilung von farbigen Prüfobjekten, insbesondere von metallic-lackierten Prüfobjekten, mit einem als quaderförmigen Gehäuse und mit einer Lichtquelle.

Beim Nachlackieren insbesondere von Autoteilen kommt es immer wieder zu der Situation, daß eine hohe Farbübereinstimmung zwischen dem nachlackierten Teil und der übrigen Karosserie gefordert ist. Eine subjektive Abschätzung der Farbübereinstimmung führt letztlich zu unrealistischen Forderungen an die Farbtreue. Daher wurden Normen entwickelt, die für eine objektive Beurteilung von Farbtoleranzen zugrundegelegt werden sollen.

Besondere Schwierigkeiten ergeben sich dabei durch das Phänomen der Metamerie der zu vergleichenden Lacke, wenn nämlich verschiedene spektrale Verteilungen der Farben die gleiche Erfindung hervorrufen.

Erhebliche Komplikationen können bei der Beurteilung von Metallic-Lacken auftreten, da bei metallic-lackierten Teilen der visuelle Eindruck auch oft von der Beobachtungsrichtung abhängt, weil nämlich die im Lack enthaltenden Bronzeteile an der Lackoberfläche unterschiedlich ausgerichtet sind.

Voraussetzungen für eine aussagefähige Beurteilung sind eine definierte Prüfanordnung, die Anwendung der gleichen Methode an verschiedenen Orten, wenn beispielsweise ein zu vergleichendes lackiertes Teil verschickt wird, die gute Reproduzierbarkeit und nicht zuletzt die Vergleichbarkeit zur Farbmetrik. Es scheint zunächst sinnvoll, die Beurteilung bei Tageslicht durchzuführen, denn auch der subjektive Vergleich verschiedener lackierter Teile, wie bei einem nachlackierten Auto, wird im allgemeinen bei Tageslicht stattfinden. Tageslicht ist ein nicht-gerichtetes Licht, mit dem die zu prüfenden Objekte diffus beleuchtet werden. Allerdings hat sich als nachteilig erwiesen, daß tages- und jahreszeitliche Schwankungen in Helligkeit und in der unterschiedlichen spektralen Verteilung des Lichtes auftreten. Dieses bedingt eine schlechte Vergleichbarkeit, beispielsweise bei der Beurteilung an zwei verschiedenen Prüforten. Auch wird die Fehlbeurteilung bei Metamerie erhöht. Schließlich sind die Lichtverhältnisse schlecht reproduzierbar. Vorteilhaft ist es allerdings, daß das Auge ständig auf diese Lichtverhältnisse adaptiert ist und nur gering belastet wird.

Um die Nachteile des Tageslichtes zu vermeiden, ist man früh dazu übergegangen, Kunstlicht zu verwenden. Von der Industrie wurden inswischen sogenannte Tageslichtleuchten entwickelt, die gute Farbwiedergabe-Eigenschaften haben, da ihre relative spektrale Energieverteilung dem Tageslicht weitgehend angeglichen ist.

Solche Tageslichtleuchten werden in Abmusterungskammern eingesetzt, in denen die Farbton-Beurteilung durchgeführt werden soll.

Bekannte Abmusterungskammern bestehen aus einem quaderförmigen Gehäuse, an dessen Decke eine Tageslicht-Leuchte montiert ist. Die Frontwand ist als durchsichtige Tür ausgebildet und dient als Beobachtungsfenster.

Es ist auch möglich, die Abmusterungskammern mit verschiedenen Strahlungsquellen zu versehen, so daß die Abmusterung bei Tageslicht, Abendlicht, Kaufhauslicht und UV-A-Strahlung vorgenommen werden kann. Das Betrachten unter zwei verschiedenen Lichtarten, also beispielsweise unter Tageslicht und Abendlicht, dient zur Untersuchung der metameren Farben, weiterhin können Kaufhaus-Lichtbedingungen realisiert werden, und die UV-Strahlungsquellen bieten die Möglichkeit, Fluoreszenserscheinungen zu überprüfen.

Das Abmustern wird so durchgeführt, daß das Bezugsobjekt und das Prüfobjekt in das von der Lichtquelle ausgeleuchtete Abmusterungsfeld gebracht werden. Die abzumusternden Flächen sollen dabei in einer Ebene liegen. Sie werden dann unter einem Winkel von 45° beobachtet. Oft muß dieser Winkel aber auch geändert werden, da einerseits Glanz oder eventuell vorhandene Glanzunterschiede von Bezugsobjekt und Prüfobjekt bei der Beobachtung stören und andererseits die Entfernung zwischen dem Auge des Beobachters und der Abmusterungsebene so groß sein soll, daß die Gesichtsfeldgröße mindestens 10° beträgt.

Mit den bekannten Abmusterungskabinen können Beobachtungsabstand und Beobachtungswinkel geändert werden, indem der Beobachter seine Haltung verändert. Es ist hierbei nicht die Möglichkeit eines reproduzierbaren Vergleiches gegeben. Somit fehlt ein entscheidendes Kriterium für die Objektivierbarkeit von Farbvergleichen.

Aufgabe der vorliegenden Erfindung ist es daher, eine Abmusterungskammer zu schaffen, bei der die visuelle Beurteilung von farbigen Prüfobjekten, insbesondere von metallic-lackierten Prüfobjekten, besser reproduzierbar als bisher möglich, vorgenommen werden kann.

Diese Aufgabe wird von einer Abmusterungskammer der eingangs beschriebenen Gattung durch die im Kennzeichen des Anspruches 1 enthaltenden Merkmale gelöst. Vorteilhafte Ausgestaltungen ergeben sich aus den Merkmalen der Unteransprüche.

Bei der erfindungsgemäßen Abmusterungskammer ist in dem Gehäuse in einstellbaren Abstand von einem Beobachtungsfenster ein Prüfobjektträger dreidimensional positionierbar angeordnet. Somit kann das sich auf dem Prüfobjektträger befindliche zu prüfende Teil in jede gewünschte Position relativ zur Lichtquelle gebracht werden. Der Beobachter befindet sich mit seinen Augen dicht vor dem Beobachtungsfenster, wodurch dann ein ziemlich genau festgelegter Abstand zum Prüfobjekt definiert werden kann.

Am Gehäuse kann ein Vorsatz angebracht sein, an dem das Beobachtungsfenster vorgesehen ist. Zweckmäßigerweise ist das Beobachtungsfenster so angeordnet, daß der Beobachter von oben auf das Prüfobjekt blicken kann.

Am Vorsatz kann weiterhin eine verschließbare Luke vorgesehen sein. Durch die Luke werden das Prüfobjekt und das Bezugsobjekt in das Gehäuse eingebracht und auf dem Prüfobjektträger angeordnet. Die Luke kann mit einer Tür verschließbar sein oder mit einem Vorhang verhängt werden.

Die Bequemlichkeit für den Beobachter wird dadurch erhöht, daß der Kasten mit Vorsatz an vertikalen Führungsschienen höhenverstellbar ist. So kann die Abmusterungskammer für Beobachter verschiedener Körpergröße leicht angepaßt werden.

Die an der Deckenwand des Kastens vorgesehene Lichtquelle kann modular ausgestaltet sein. So ist ein leichter Austausch bei Verschleiß der Röhren möglich.

Der Prüfobjektträger weist vorteilhaft eine Trägerplatte für die zu prüfenden Objekte auf, auf die diese einfach nebeneinander gelegt werden können. Die Trägerplatte kann sowohl um eine horizontale Achse verschwenkbar als auch um eine vertikale Achse drehbar sein.

Auftreffwinkel des Lichtes und Beobachtungswinkel können daher in weiten Bereichen verändert werden, so daß eine Betrachtung der Objekte unter den verschiedensten, jedoch immer definierbaren Winkeln möglich ist.

Der Prüfobjektträger kann am Boden des Kastens an wählbaren Positionen arretiert werden. Es ist dabei zweckmäßig, den Boden des Kastens mit einem Bezugsgitter zu versehen, so daß bestimmte Positionen des Prüfobjektträgers beispielsweise an den Kreuzungspunkten des Gitters festgelegt werden können.

Weiterhin kann die Trägerplatte höhenverstellbar sein.

Mit all den vorgenannten Maßnahmen ist es möglich, Prüfobjekte und Bezugsobjekt in nahezu jede relative Lage sowohl zur Beleuchtungsquelle als zum Beobachtungsfenster zu bringen. Alle Einstellungen sind definierbar und reproduzierbar einstellbar und können somit von Prüfart zu Prüfart übertragen bzw. ausgetauscht werden.

Da in den weitaus meisten Fällen lackierte Metalteile zu begutachten sind, ist es vorteilhaft, die Trägerplatte mit einer magnetischen Auflagefläche zu versehen, so daß diese Teile auf der Trägerplatte festgehalten werden. Um sie gegen das Abrutschen bei stark vertikalen Positionen der Trägerplatte zu sichern, kann diese an einer Seite eine Auflagekante aufweisen.

Der Prüfobjektträger kann von dem Beobachter ebenfalls durch die Luke von außen verschoben und verstellt werden, jedoch ist es auch möglich, den Prüfobjekt motorgetrieben mittels einer elektronischen Steuerung zu bewegen.

Die ganze Abmusterungskammer ist transportabel, so daß sie an jeden beliebigen Prüfort gebracht werden kann und vom Raumlicht unabhängig ist.

Im folgenden soll anhand der Zeichnung der Erfindung beispielhaft dargestellt werden. Es zeigt

Fig. 1 eine erfindungsgemäße Abmusterungskammer im Längsschnitt und

Fig. 2 eine Detailansicht eines Prüfobjektträgers.

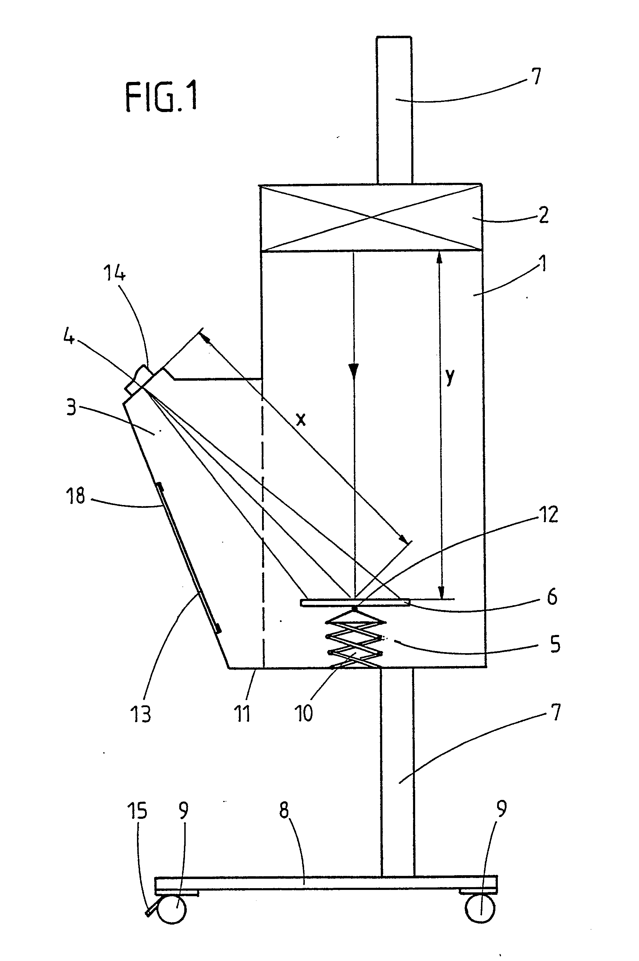

Fig. 1 zeigt ein quaderförmiges Gehäuse (1) mit einem Vorsatz (3), der an der Vorderseite des Gehäuses (1) angeordnet ist. Gehäuse (1) und Vorsatz (3) sind an Führungsschienen (7) angebracht, die das über ein Spindelgetriebe höhenverstellbare Gehäuse (1) auf zwei einander gegenüberliegenden Seiten des Gehäuses (1) führen. Die Führungsschienen (7) ruhen auf einem Unterbau (8), welcher Rollen (9) aufweist, von denen wenigstens eine mit einer Arretierung (15) versehen ist. Der Vorsatz (3) weist an seiner Frontseite eine Luke (13) auf. Durch diese Luke (13) werden Prüfobjekt und Bezugsobjekt in das Gehäuse (1) eingebracht. Die Luke (13) ist mit einem Tuch zu verhängen. Der Innenraum des Gehäuses (1) und des Vorsatzes (3) weisen eine neutrale Farbe auf, die zu dem nicht reflektierend ist. Beispielsweise kann der gesamte Innenraum der Abmusterungskammer mit einem entsprechenden neutral-farbigen, beispielsweise grauen matten Tuch ausgekleidet sein. Im Gehäuse (1) befindet sich ein Prüfobjektträger (5), der eine Trägerplatte (6) aufweist. Prüfobjekt und Bezugsobjekt werden auf diese Trägerplatte (6) aufgelegt, so daß für beide Objekte die zu prüfende Fläche in der gleichen Ebene liegt. An der Deckenwand des Gehäuses (1) ist eine Lichtquelle (2) , beispielsweise eine Tageslicht-Leuchte, angebracht. Die Lichtquelle (2) bestrahlt den Innenraum des Gehäuses (1) gleichmäßig zu einem Beleuchtungsabstand y.

Am Vorsatz (3) ist ein Beobachtungsfenster (4) mit einer Manschette (14) vorgesehen. Der Beobachter geht dicht an das am oberen Teil des Vorsatzes (3) vorgesehene Fenster (4) heran und legt das Gesicht möglichst eng an die Manschette (14).

Somit ist gewährleistet, daß ein bestimmter Beobachtungsabstand x immer eingehalten werden kann. Das Gehäuse (19) und Vorsatz (3) gemeinsam höhenverstellbar sind, kann das Beobachtungsfenster (4) immer auf eine solche Höhe eingestellt werden, daß der Beobachter in bequemer Körperhaltung auf das Prüfobjekt blickt. Die Frontseite des Vorsatzes (3) tritt relativ zum Beobachtungsfenster (4) zurück. Die Luke (13) ist dabei in einer solchen Position angebracht, daß der Beobachter während des Schauens durch das Fenster (4) auch gleichzeitig in die Luke (13) eingreifen kann und den Prüfobjektträger (5) bedarfsgerecht bewegen kann. Da die Luke (13) mit einem flexiblen Tuch (18) verhängt ist, kann das Verschieben des Prüfobjektträgers (5) erfolgen, ohne daß störende Außenlichteinflüsse auftreten. Der Prüfobjektträger (5) weist eine Einrichtung auf, mit Hilfe derer die Objekte um eine horizontal liegende Achse (12) geschwenkt werden können. Weiterhin ist ein Scherengelenk (10) vorgesehen, wodurch eine Höhenverstellbarkeit des Prüfobjektträgers (5) vorgenommen werden kann. Die Trägerplatte ist auch um eine vertikale Achse drehbar. Der gesamte Prüfobjektträger (5) kann vom Beobachter auf dem Boden des Gehäuses (1) beliebig verschoben werden, jedoch ist es vorteilhaft, nur bestimmte Positionen zuzulassen, die beispielsweise durch ein am Boden vorgesehenes Gitter bestimmt werden können.

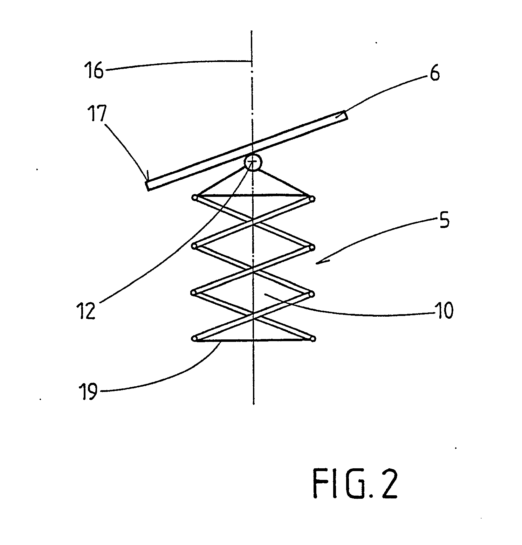

Fig. 2 zeigt den Prüfobjektträger (5) im Detail. Auf einer Grundplatte (19) ist ein Scherengelenk (10) angebracht. Durch Aus- bzw. Einfahren des Scherengelenks (10) kann die Trägerplatte (6) in ihrer Höhe verstellt werden. Die Trägerplatte (6) ist weiterhin um eine horizontale Achse (12) schwenkbar, so daß das zu prüfende Objekt unter verschiedenen defenierbaren Einfallswinkeln des darauf strahlenden Lichtes betrachtet werden kann. Weiterhin ist die Trägerplatte (6) um eine vertikale Achse (16) drehbar, was bei der Beurteilung von Metallic-Lacken wichtig ist, da diese einen unterschiedlichen Farbeindruck hervorrufen, wenn sie aus verschiedenen Beobachtungsrichtungen betrachtet werden. Schwenk- und Drehwinkel der Trägerplatte (6) können mit Hilfe von Stellrädern und entsprechenden Getrieben eingestellt werden, wobei auch eine Möglichkeit zum Ablesen der entsprechenden Winkel vorgesehen sein kann. Diese zusätzlichen Meß- und Einstelleinrichtungen sind in der Zeichnung jedoch nicht dargestellt. Die Trägerplatte (6) ist aus magnetischem Material und weist an einer Seite eine Auflagekante (17) auf, so daß Prüfobjekt und Bezugsobjekt bei einer eher vertikalen Stellung der Trägerplatte (6) gegen Abrutschen gesichert sind.

Bei dieser Abmusterungskammer wird der Abstand Auge-Objekt vorzugsweise in der Größenordnung von ca. 70 cm gehalten, der Abstand Leuchte-Objekt in der Größenordnung von 80 cm.

## Ansprüche

1. Abmusterungskammer zur visuellen Beurteilung von farbigen Prüfobjekten, insbesondere von metallic-lackierten Prüfobjekten, mit einem quaderförmigen Gehäuse und mit einer Lichtquelle, **dadurch gekennzeichnet,** daß in dem Gehäuse (1) in einstellbarem Abstand von einem Beobachtungsfenster (4) ein Prüfobjektträger (5) dreidimensional postionierbar angeordnet ist.

2. Abmusterungskammer nach Anspruch 1, dadurch gekennzeichnet, daß am Gehäuse (1) ein Vorsatz (3) angebracht ist, an dem das Beobachtungsfenster (4) vorgesehen ist.

3. Abmusterungskammer nach Anspruch 1 oder 2, dadurch gekennzeichnet, daß am Vorsatz (3) eine verschließbare Luke (13) vorgesehen ist.

4. Abmusterungskammer nach einem der Ansprüche 1 bis 3, dadurch gekennzeichnet, daß der Gehäuse (1) mit Vorsatz (3) an vertikalen Führungsschienen (7) höhenverstellbar ist.

5. Abmusterungskammer nach einem der Ansprüche 1 bis 4, dadurch gekennzeichnet, daß die modular ausgestaltete Lichtquelle (2) an der Deckenwand des Gehäuses (1) vorgesehen ist.

6. Abmusterungskammer nach einem der Ansprüche 1 bis 5, dadurch gekennzeichnet, daß der Prüfobjektträger (5) eine Trägerplatte (6) für Prüfobjekte aufweist.

7. Abmusterungskammer nach einem der Ansprüche 1 bis 6, dadurch gekennzeichnet, daß die Trägerplatte (6) um eine horizontale Achse (12) definiert schwenkbar ist.

8. Abmusterungskammer nach einem der Ansprüche 1 bis 7, dadurch gekennzeichnet, daß die Trägerplatte (6) um eine vertikale Achse (16) definiert drehbar ist.

9. Abmusterungskammer nach einem der Ansprüche 1 bis 8, dadurch gekennzeichnet, daß der Prüfobjektträger (5) am Boden (11) des Gehäuses (1) an wählbaren Positionen definiert arretierbar ist.

10. Abmusterungskammer nach einem der Ansprüche 1 bis 9, dadurch gekennzeichnet, daß die Trägerplatte (6) definiert höhenverstellbar ist.

11. Abmusterungskammer nach einem der Ansprüche 1 bis 10, dadurch gekennzeichnet, daß die Trägerplatte (6) eine magnetische Auflagefläche sowie an einer Seite eine Auflagekante (17) aufweist.

FIG.1

FIG.2